# EUROPEAN PATENT APPLICATION

(11) **EP 2 660 412 A2**
(43) Date of publication of application: **06.11.2013**
(21) Application number: 13159149.7
(22) Date of filing: 14.03.2013
(51) Int. Cl.: E05B 51/02, B64C 1/14

(54) **Pneumatically controlled locking system for the cockpit door of an aircraft**

(30) Priority: 29.03.2012 DE 102012006357; 29.03.2012 US 201261617437 P
(71) Applicant: Airbus Operations GmbH, 21129 Hamburg (DE)
(72) Inventor: Poth, Albin, 27798 Hude (DE); Nienaber, Maik, 28199 Bremen (DE)
(74) Representative: UEXKÜLL & STOLBERG

(57) **Abstract**

A locking system for locking and unlocking a door, preferably a cockpit door provided between the cockpit and the cabin of an aircraft, is presented and described. The locking system has a door (1), which is held by hinges on a door frame (2) and can be moved between an open position and a closed position, and at least one closing means (3), which is arranged on one upright (2) of the door frame such that it can lock the door when the door is in its closed position. The locking system further comprises a compressed air source (4), which can be coupled to the at least one closing means (3) in order to move the at least one closing means (3) from an unlocking position to a locking position by supplying compressed air, and at least one venting valve (8), which is coupled to each of the at least one closing means (3) in order to conduct compressed air away from each of the at least one closing means (3) when in the open state, in order to move the at least one closing means (3) from the unlocking position to the locking position.

## Description

The present invention relates in general to a pneumatically controlled and/or pneumatically actuated locking system for a door or for a door system which is preferably provided between the cockpit and the cabin of an aircraft (also termed cockpit door). The invention can however also be used for other doors in the interior of an aircraft or in other devices. Thus, the present invention can be used for example in industrial installations where protection from the risk of explosions is of great importance, or in devices where in an emergency, for example in the event of a loss of electrical power, it is necessary that the doors can open automatically or can be opened without electricity.

Conventional commercial aircraft have, provided between the cockpit and the cabin, a security door or cockpit door. Such a cockpit door must be adequately stable and must have a secure locking system, such that the cockpit door cannot be opened, or can be opened only with great difficulty, by force, in order to thereby hinder undesired entry (for example by terrorists or hijackers) into the cockpit. Cockpit doors are therefore typically made of fireproof and bulletproof material and are equipped with a locking system having a plurality of locking bars or deadbolts with the aid of which the cockpit door can be securely locked to the door frame.

Typically, a cockpit door is coupled to a door frame with the aid of door hinges such that it opens towards the cockpit. In this way, if there is a loss of pressure in the cockpit, for example due to a bird strike breaking a window, the cockpit door can be opened in the direction of the loss of pressure (i.e. towards the interior of the cockpit) in order to allow air to flow from the cabin into the cockpit. Were the cockpit door to open not towards the cockpit (but only towards the cabin), the pilots would be unable to open the cockpit door towards the cabin because of the pressure difference between the cockpit and the cabin. The described configuration is further preferred because the door hinges are located inside the cockpit and are inaccessible from the cabin, which improves the level of security against breaking open the cockpit door by force.

Various locking and/or unlocking systems for cockpit doors are currently in use. One of these systems uses a plurality of electrically controlled deadbolts which are arranged and configured to lock and/or unlock the cockpit door. In this context, the deadbolts are moved into their locking position with the aid of powerful solenoids, which must be permanently supplied with electric power in order to hold the bolts in their locked position. If the supply of power is interrupted, the bolts are returned to their unlocked position by spring force, such that the cockpit door can then be opened. Therefore, in order to move the deadbolts into their locked position, the electromagnetic force thereof must be greater than the restoring force of the springs.

Proceeding from the above prior art, it is the object of the present invention to make available a locking system for a cockpit door of the type described in the introduction which overcomes the drawbacks of the known locking system. A particular aim is to significantly reduce the electrical energy requirement which is necessary for locking the cockpit door in accordance with the prior art, and simultaneously to increase the life of the locking elements.

This object is achieved in that the deadbolts and/or lock catches for locking and unlocking a door, in particular a cockpit door, are pneumatically controlled and/or actuated. In particular, in normal operation, the door is locked and unlocked by generating an overpressure in a pneumatic circuit which is pneumatically coupled to the deadbolts and/or lock catches. This overpressure can be used to hold the deadbolts or lock catches (hereinafter also termed closing means) in their locked state, without this requiring a permanent supply of electrical energy. The door is generally unlocked by the overpressure in one part of the pneumatic circuit being reduced to a level which allows the closing means to be returned to their unlocking position preferably by means of spring force. In order to reduce the pressure in the pneumatic circuit to the point that the closing means can move into their unlocking position, one or more venting valves of the pneumatic circuit are opened.

The cockpit door can be locked in such a way that one or more deadbolts provided in the door frame or door jamb are inserted directly into openings provided therefor in the door. However, this locking method has the drawback that all tolerances and shifting of the door which is not infrequent can impair the operation of this locking method.

It is therefore preferred for one or more lock catches provided in the door frame or door jamb to be actuated pneumatically, with the aid of which associated locking bolts in the door, similar to a conventional house door, are blocked or released.

The corresponding locking bolt in the door can be movable or immovable. In the movable solution, the locking bolt can be mechanically operated preferably from a first side of the door (for example by means of a door handle or doorknob) and cannot be reached or operated from the second, opposite side. It is however also conceivable that the locking bolt can be actuated with the aid of a conventional door lock by a user who has the necessary key.

As explained above, the pneumatic locking system according to the invention has one or more (preferably three) of the previously explicated closing means. It is of course possible to use just one closing means, but for the sake of improving security at least two closing means are preferred. These closing means are preferably provided or mounted in the door frame. Although it is in theory conceivable for the closing means to be provided in the door, the pneumatic circuit would then also have to be integrated into the door. At the least, however, the compressed air lines coupled to the closing means would have to be fed out of the door to an external pneumatic circuit. However, both of these solutions have proven to be relatively impractical.

For the sake of better understanding, it is once again pointed out that the term closing means should be understood as referring to both the described deadbolts and the lock catches. The deadbolts and lock catches represent equivalent closing means, which both fall within the scope of the invention. Depending on the use, spatial and security requirements and so on, a person skilled in the art will use either pneumatically actuable deadbolts or pneumatically actuable lock catches.

The deadbolts are preferably provided on that vertical side (door jamb) of the door frame which lies opposite the door hinges, the bolts moving in a horizontal direction. To increase security, further deadbolts can be provided on the other edges of the door frame, that is to say for example also on the vertical edge on which the door hinges are also provided. In any case, the protruding ends of the deadbolts engage in correspondingly formed receiving portions, holes or recesses which are formed in the associated side edges of the cockpit door (or, more generally, the door) when the deadbolts are moved from their unlocking position into their locking position. The cockpit door is thus securely locked.

When in the deactivated (unlocked) state, the deadbolts are located substantially inside the door frame, so that the end faces of the bolts are substantially flush with the outer face of the door frame and are not in engagement with the associated receiving holes provided in the cockpit door. The deadbolts are preferably biased in this unlocked deactivated position with the aid of springs. However, other solutions, for example permanent magnets, are also conceivable.

Each of the deadbolts is coupled to a compressed air line so that, when compressed air is supplied to the deadbolts via their associated compressed air lines, the deadbolts are moved into their extended locking position, so as to engage with the associated receiving holes in the cockpit door when the latter is closed. Clearly, the air pressure for extending the bolts must be high in order to overcome the restoring force for example of the spring elements. In order to supply the compressed air necessary for the locking process to the deadbolts, each of the deadbolts is connected to a compressed air source via an associated compressed air line, a valve being provided in each of these compressed air lines. If these valves (also hereinafter termed isolation valves) are opened, compressed air is supplied from the compressed air source through the compressed air lines and via these valves to the deadbolts, as a result of which the deadbolts are moved into their closed or locked position. The valves are configured such that they are normally in an open state (default = open).

Venting valves are in each case provided in the compressed air lines, specifically between the isolation valves and the associated deadbolts. These venting valves are normally closed (default = closed). If the cockpit door is to be unlocked, the venting valves have to be opened, whereby the air pressure for actuating the deadbolts (extending the bolts into the locking position) is reduced to a point where the deadbolts are returned to their deactivated (unlocked) position, to be precise by means of the return springs. Preferably, at the same time as the venting valves are opened, the isolation valves are closed in order to disconnect the deadbolts from the compressed air source.

In a preferred embodiment, the venting valves are opened and the isolation valves are closed either with the aid of a control unit, which can be operated by the cockpit crew from within the cockpit, or a switch mechanism can be provided in the cabin (preferably in the vicinity of the cockpit door). This switch mechanism can be actuated by a conventional key. As an alternative, the switch mechanism can be realized as a keypad, so that the cabin crew can enter a secret code in order to unlock the cockpit door from the outside. In both cases, the switch mechanism is electrically connected to the control unit.

The keypad or a switch on the freely accessible (cabin) side can be used for direct unlocking. Usually, however, the keypad is used to trigger a bell signal in the cockpit. Unlocking can then be performed from the cockpit, for example by means of a switch.

In an alternative configuration of the invention, the isolation valve and the venting valve for each deadbolt can also be formed in an integrated manner such that, when the isolation valve is closed, the venting valve is simultaneously opened, and vice versa.

In a preferred configuration of the invention, the venting valves are coupled to a manual emergency unlocking device, so that the cockpit crew can open the venting valves manually. This can for example be achieved by providing additional mechanical touch control valves, turning valves or lever valves upstream of or parallel with the venting valves. It is also possible that the venting valves which are present can be actuated not only electrically via the control unit but also in addition mechanically. A person skilled in the art will be aware of the various configurations of mechanical valves, and therefore these need not be explained here in further detail.

It is moreover preferred that a potential loss of pressure within the cockpit can be detected with the aid of pressure sensors. These sensors are provided at suitable positions in the cockpit in order to detect a loss of pressure in the cockpit, which can arise when for example the aircraft collides with a bird and a cockpit window is thereby broken. The sensors are connected to the control unit (but may also be integrated into the control unit) so that signals which indicate a loss of pressure in the cockpit are transmitted to the control unit, whereupon corresponding control signals are generated and transmitted to the venting valves by the control unit in order to immediately open the venting valves, so that the cockpit door is unlocked. The control signals are preferably also transmitted to the isolation valves in order to close the isolation valves, in order to isolate the deadbolts from the compressed air source. As an alternative or in addition to the pressure sensors, further sensors can be provided in order to detect an abnormal state (e.g. temperature, humidity, acceleration, etc.).

In a particularly preferred embodiment, at least one vacuum source is provided in the pneumatic circuit of the locking system according to the invention. This vacuum source is preferably formed by a vacuum cylinder, within which a vacuum (negative pressure) can be generated by means of a vacuum pump. For safety reasons, at least two negative pressure sources (i.e. preferably at least two vacuum cylinders) are provided. These vacuum cylinders are coupled to the deadbolts via respective vacuum valves and via the isolation valves described above. As an alternative, the vacuum valves can also be coupled directly to the deadbolts. The vacuum valves are normally closed (default = closed). If a loss of pressure is detected in the cockpit, the control unit generates corresponding control signals, which are forwarded to the vacuum valves in order to open the vacuum valves, in order thus to operatively connect the vacuum cylinders to the pneumatic circuit. In this way, all the air is sucked out of the pneumatic circuit, so that a negative pressure is generated in the pneumatic circuit, which negative pressure is sufficient to immediately move the deadbolts into their unlocking position, so that the cockpit door is opened. In this way, the loss of pressure in the cockpit can at least be reduced, in that air can flow from the cabin into the cockpit through the open cockpit door. Electric vacuum pumps, which are suitably connected to the vacuum cylinders, are preferably provided in order to ensure that an adequate vacuum is always present in the vacuum cylinders.

Finally, a compressed-air compressor and preferably an overpressure cylinder connected thereto are provided in the pneumatic circuit of the locking system of the present invention, in order to ensure that the necessary overpressure is present in the pneumatic circuit. The air compressor is also connected to the control unit, in order to ensure that the compressor is controlled in such a way that an adequate overpressure is always present in the pneumatic circuit. However, the compressor need not necessarily be coupled to an overpressure cylinder. As an alternative, the compressor can be actuated and/or operated whenever compressed air is required in the pneumatic circuit. As an alternative, instead of the compressor, another compressed air source which is already present can also be used.

It is furthermore possible for just one pump to be provided instead of a separate vacuum pump and an air compressor, which pump is suitably operated by means of the control unit in order to generate on the one hand an overpressure in the overpressure cylinder and on the other hand a negative pressure in the at least one vacuum cylinder. This pump is preferably embodied as a bidirectional pump, which is coupled to corresponding valves in order to generate the respective pressures. It is furthermore possible to also generate the necessary overpressure and/or negative pressure by other systems (e.g. bleed air from the engines or negative pressure from the atmosphere). It is also conceivable for the venting valves to be coupled directly to the at least one vacuum cylinder, so that the deadbolts and/or the pneumatic actuation mechanism of the deadbolts can also be vented irrespective of the outside pressure (closed system).

Above, the invention was described substantially on the basis of the deadbolts. The above control and actuation mechanisms are equally applicable to the lock catches which are also described.

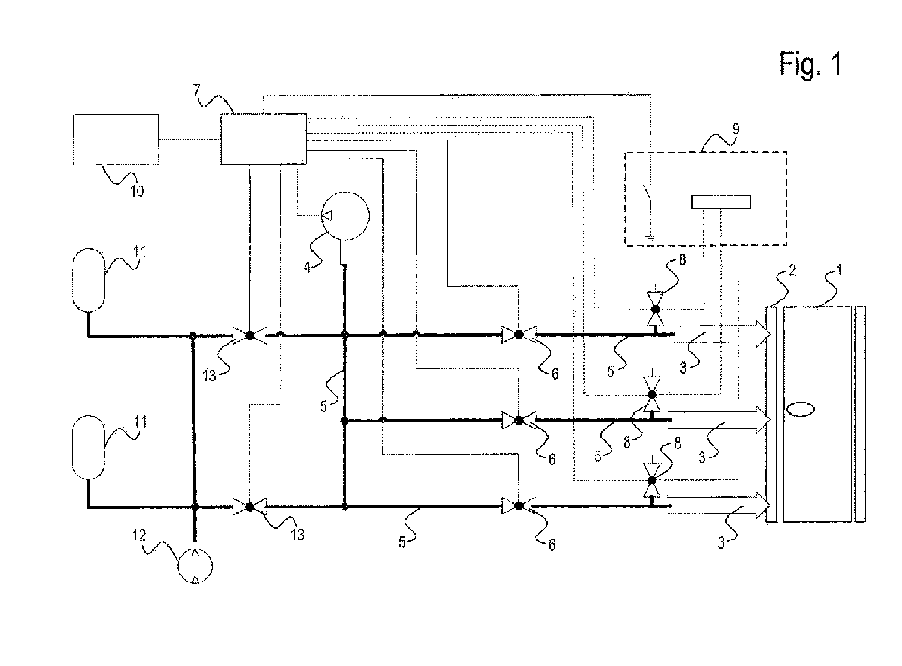

Hereinbelow, the present invention will be explained with reference to a drawing, which represents a preferred embodiment of a locking system according to the invention, wherein
- Fig. 1: is a block circuit diagram showing the components of the embodiment of the locking system.

It should, however, be understood that Fig. 1 shows not only the components of the locking system that are essential to the invention, but also preferred components which are not absolutely necessary for operation but are merely the subject of preferred configurations of the invention. It should also be understood that the described deadbolts can be substituted for lock catches. As explained at the outset, the applications of the invention are not limited to cockpit doors, and therefore redundant system components which are required in the case of aircraft for safety reasons need not necessarily be provided in other applications.

Fig. 1 shows a cockpit door 1, which is attached pivotably to a door frame with the aid of conventional door hinges, said door frame being represented by a right and a left door jamb 2. Three pneumatically actuable deadbolts 3 (represented schematically by arrows) are provided in the left door jamb 2. These deadbolts 3 are configured such that, when in their deactivated position, they are in a retracted position in which the end faces of the bolts are flush with the outer face of the door jamb. The bolts are preferably biased in the retracted position by return devices. The return devices can be realized by springs, permanent magnets or similar devices. The deadbolts 3 are further configured to be moved into an extended position when supplied with compressed air, in which extended position the deadbolts 3 engage with corresponding receiving holes (formed on that edge of the cockpit door which faces the left door jamb 2) when the cockpit door is closed in order to lock the cockpit door. If no compressed air is supplied to the deadbolts, or if the air pressure drops below a certain value, the deadbolts are moved back into their retracted deactivated position by the return devices in order to unlock the cockpit door. However, unlocking can also be brought about or accelerated by applying a negative pressure (vacuum) to the deadbolts.

The cockpit door is locked and unlocked by each of the deadbolts being connected to a pneumatic circuit, in order to supply to the bolts the overpressure necessary for locking or in order to reduce this pressure to a level where the deadbolts are moved back into their unlocking position. To this end, an air compressor 4 and an overpressure cylinder connected thereto are provided in the pneumatic circuit, which overpressure cylinder is connected to the deadbolts via compressed air lines 5. Isolation valves 6, which are usually in an open position, are in each case provided in the compressed air lines 5 between the overpressure cylinder (or compressor 4) and the deadbolts 3. Each of the isolation valves 6 is electrically connected to a control unit 7, by means of which the valves 6 can be opened or closed. Electrically actuable valves are generally known and will not be explained further here.

In order to reduce the air pressure at the deadbolts 3, in order that the deadbolts can move into their unlocking position, one or more venting valves 8 are provided on the compressed air lines 5 in order to vent the compressed air lines 5 to the surroundings. These venting valves 8 are also electrically connected to the control unit 7. The venting valves 8 are normally in a closed state. If, as explained above, the isolation valves 6 are opened and the venting valves 8 are closed, compressed air can be supplied to the deadbolts 3 via the pressure cylinder 4 at a pressure which is sufficient to move the deadbolts 3 into their locking position against the biasing force and to hold them in that position.

As also shown in Fig. 1, the air compressor 4 is connected to the control unit 7. A pressure sensor is preferably provided on the pressure cylinder coupled to the compressor, in order to detect the pressure in the cylinder and in order to control the compressor by means of the control unit 7 such that a desired overpressure is maintained in the cylinder, which overpressure is sufficient to reliably move the deadbolts into their locked position.

The locking system according to the invention thus operates as follows: the cockpit door is first of all opened so that the cockpit crew can enter the cockpit. For this, the deadbolts are preferably in their retracted unlocking position, i.e. the venting valves 8 are open and the isolation valves 6 are closed, so that an overpressure does not act on the bolts 3. It is also possible for the deadbolts to be in their extended position, the bolts (similarly to a conventional door latch) being configured to be briefly pushed back into their unlocking position when the cockpit door is closed.

If the cockpit door is closed, the cockpit crew can operate the control unit 7 with the aid of a switch or key (not shown) such that the control unit generates electrical signals in order to open the isolation valves and close the venting valves. In this manner, overpressure from the overpressure cylinder acts on the deadbolts such that the deadbolts are extended into their locked position, the bolts engaging in the receiving holes of the closed cockpit door in order to lock the cockpit door. In order to unlock the cockpit door 1, the cockpit crew can again actuate the switch connected to the control unit so that the control unit 7 generates corresponding signals in order to open the venting valves 8 and close the isolation valves 6, whereupon the bolts 3 are moved into their retracted position by the return devices, whereby the cockpit door is unlocked and can be opened. A lock for locking and/or unlocking can optionally also be provided outside the cockpit in order to be able to lock and unlock the cockpit door also from the outside. Instead of a lock, however, a keypad can also be provided in order to enter a multiple-digit numerical code for operating the locking device.

As described at the outset, each of the isolation valves 6 can be formed integrated with the associated venting valve 8 so that, when the isolation valve 6 is closed, the venting valve 8 is simultaneously opened, and vice versa (three-way valve).

The locking system of the present invention can furthermore be provided with a manual emergency unlocking device 9. This emergency unlocking device 9 is coupled to each of the venting valves 8 in order to make it possible to manually open the venting valves. This can be brought about simply in that the venting valves can be opened or closed individually or as a group by means of touch controls, levers or turning means. An emergency unlocking device of this type is necessary in order to be able to manually open the venting valves in an emergency (e.g. a loss of electrical power, a fault in the control unit, disruption to the control lines, etc.) in order in this way to be able to manually unlock the cockpit door.

One or more air pressure sensors 10 can be provided inside the cockpit in order to detect a loss of pressure in the cockpit. This sensor 10 is connected to the control unit 7. In the event of a loss of pressure in the cockpit, a corresponding sensor signal is transmitted to the control unit 7, which in turn generates corresponding control signals in order to open the venting valves 8 and (optionally) close the isolation valves 6, in order thus to unlock the cockpit door. The isolation valves 6 can be closed in the event of a manual override. The isolation valves are preferably kept open. However, it is in principle conceivable that the closing means can be unlocked by venting via the venting valves without using, for this, the vacuum valves described below. Such a solution would, however, lead to longer unlocking times and is less reliable.

In order to ensure absolutely secure operation of the unlocking device in an emergency (loss of pressure), at least one vacuum source (preferably in the form of vacuum cylinders 11) is provided in the pneumatic circuit of the locking system. Furthermore, a vacuum pump 12 is provided which is coupled to each of the vacuum cylinders 11 in order to generate a vacuum (negative pressure) in the vacuum cylinders. A pressure sensor (not shown) which is coupled to the control unit can be provided in each of the vacuum cylinders 11. The control unit 7 is configured to forward a control signal to the vacuum pump on the basis of the detected pressure signals in order to control the vacuum pump such that a desired negative pressure is maintained in the vacuum cylinders. The vacuum cylinders 11 are coupled to the deadbolts 3 via associated vacuum valves 13 and via the isolation valves 6. The vacuum valves 13 are normally closed, and in the event that a loss of pressure is detected in the cockpit, the control unit 7 generates corresponding control signals in order to open the vacuum valves, in order thus to connect the vacuum cylinders 11 directly to the deadbolts 3 via the usually open isolation valves 6. Thus, a negative pressure is generated at the deadbolts in order to move the deadbolts into their unlocking position, so that the cockpit door is securely unlocked and opened in the event of a loss of pressure in the cockpit.

As has already been explained, instead of the compressor 4 and the vacuum pump 12, just one pump can be provided, which is operated by means of the control unit 7 in order to generate on the one hand an overpressure in the overpressure cylinder and on the other hand a negative pressure in the at least one vacuum cylinder.

## Claims

1. Locking system for locking and unlocking a door, having
a door (1), which is held by hinges on a door frame (2) and can be moved between an open position and a closed position, and
at least one closing means (3), which is arranged on one upright (2) of the door frame such that it can lock the door when the door is in its closed position,
**characterized in that** the locking system further comprises:
a compressed air source (4), which can be coupled to the at least one closing means (3) in order to move the at least one closing means (3) from an unlocking position to a locking position by supplying compressed air, and
at least one venting valve (8), which is coupled to each of the at least one closing means (3) in order to conduct compressed air away from each of the at least one closing means (3) when in the open state, in order to move the at least one closing means (3) from the unlocking position to the locking position.

2. Locking system according to Claim 1, **characterized in that** the at least one closing means (3) is biased in the unlocking position with the aid of return devices.

3. Locking system according to one of the preceding claims, **characterized in that** the at least one closing means (3) is connected to the compressed air source (4) via an associated compressed air line (5), wherein an isolation valve (6) is provided in each of these compressed air lines (5) in order to supply compressed air to the at least one closing means (3) if the isolation valve (6) is open, as a result of which the at least one closing means is moved into the locking position.

4. Locking system according to one of the preceding claims, **characterized in that** the at least one venting valve (8) and the at least one isolation valve (6) can be actuated with the aid of a control unit (7).

5. Locking system according to one of the preceding claims, **characterized in that** the at least one venting valve (8) is coupled to a manually actuable emergency unlocking device (9) such that the at least one venting valve (8) can be opened and closed manually.

6. Locking system according to one of the preceding claims, **characterized in that** at least one sensor (10) is connected to the control unit (7), wherein the control unit is configured to generate control signals which are fed to the at least one venting valve (8) in order to open the at least one venting valve (8) if the at least one sensor (10) detects an abnormal state.

7. Locking system according to Claim 6, **characterized in that** at least the control unit (7) is configured to generate control signals which are fed to the at least one isolation valve (6) in order to close the at least one isolation valve (6) if the sensor (10) detects an abnormal state.

8. Locking system according to one of the preceding claims, **characterized in that** at least one vacuum source (11) is provided and is coupled to the at least one closing means (3) via at least one vacuum valve (13) in order to apply a negative pressure to the at least one closing means (3) in order to move the at least one closing means (3) into the unlocking position.

9. Locking system according to Claim 8, **characterized in that** the control unit (7) is configured to generate control signals which are fed to the at least one vacuum valve (13) in order to open the at least one vacuum valve (13) if the sensor (10) detects an abnormal state.

10. Locking system according to Claim 8 or 9, **characterized in that** the vacuum source (11) is formed by a vacuum cylinder within which a negative pressure can be generated by means of a vacuum pump.

11. Locking system according to one of the preceding claims, **characterized in that** the locking system is configured to lock and/or unlock a cockpit door (1) which is provided between the cockpit and the cabin of an aircraft.

12. Locking system according to Claim 11, **characterized in that** the at least one sensor (10) is a pressure sensor in order to detect a loss of pressure in the cockpit of the aircraft, and **in that** the locking system is configured to unlock the cockpit door if the sensor (10) detects a loss of pressure.

13. Locking system according to one of the preceding claims, **characterized in that** the at least one closing means (3) is formed by a deadbolt or a lock latch.
